# EUROPÄISCHE PATENTSCHRIFT

(11) **EP 3 623 843 B1**
(45) Veröffentlichungstag und Bekanntmachung des Hinweises auf die Patenterteilung: **13.01.2021**
(21) Anmeldenummer: 18193809.3
(22) Anmeldetag: 11.09.2018
(51) Int. Cl.: G01S 17/42, G01S 7/481

(54) **HANDGEHALTENES LASERDISTANZMESSGERÄT**
HAND-HELD LASER RANGE FINDER
APPAREIL DE MESURE DE DISTANCE LASER PORTATIF

(43) Veröffentlichungstag der Anmeldung: 18.03.2020
(73) Patentinhaber: Leica Geosystems AG, 9435 Heerbrugg (CH)
(72) Erfinder: HAMMERER, Markus, A-6833 Fraxern (AT)
(74) Vertreter: Kaminski Harmann

(56) Entgegenhaltungen:
- JP-A- 2003 302 209
- US-A1- 2003 098 973
- US-A1- 2011 066 399

## Beschreibung

Die Erfindung betrifft ein Laser-Entfernungsmessgerät in Form eines Handgeräts nach dem Oberbegriff des Anspruchs 1 sowie einer Methode zum Aufmessen mit einem ebensolchen nach Anspruch 6, sowie einem diesbezüglichen Computerprogrammprodukt nach Anspruch 15.

Die Erfindung betrifft ein handgehaltenes Gerät zur elektro-optischen Abstandsmessung, oft auch als Hand-Entfernungsmessgerät, Hand-Distanzmessgerät, Disto, EDM, Distometer, LaserDisto, Distomat, Distanzer, Laserentfernungsmesser, etc. bezeichnet). Es handelt sich dabei um ein Handgerät, also ein Gerät, welches während der Messung in der Hand gehalten wird, für einfache Vermessungsarbeiten, etwa im Handwerk oder in der Bauvermessung. Einige Geräteausführungen können dabei neben einer einfachen Distanzmessfunktionalität z.B. auch Flächen, Volumina, Winkel, Neigungen, Schrägstrecken, Höhenwinkel, etc. berechnen, zugehörige Metadaten wie Bilder oder andere Attribute speichern, und/oder eine Datenübertragung zu anderen Geräten, wie Laptops, Tablet-PCs, Smartphones, etc. bereitstellen.

Die Entfernungsmessung erfolgt dabei optisch mit sichtbarem oder unsichtbarem Licht, vielfach mit einem Halbleiterlaser als Lichtquelle, und basiert meist auf einer Laufzeitmessung oder einer Messung von Phasenverschiebungen eines von einem Zielobjekt zurückgeworfenen Anteils von ausgesendeten Lichtpulsen, vorzugsweise mit einer Genauigkeit um den Millimeterbereich oder darunter. Dabei werden meist diffuse Reflexe an natürlichen Oberflächen genutzt, gelegentlich aber auch spezielle Reflexfolien oder dergleichen am Zielobjekt angebracht.

Aus der DE 101 57 378 ist z.B. ein Messgerät zur berührungslosen Abstandmessung bekannt, das einen optischen Sendepfad mit einem optischen Sender und einen optischen Empfangspfad mit einer Empfängeroptik und einem optischen Empfänger sowie ein Gerätemodul, welches die Komponenten von Sende- und Empfangsmodul aufnimmt, aufweist. Zur Beibehaltung einer hohen Messgenauigkeit über den gesamten Temperaturbereich sind die Komponenten von Sende- und Empfangspfad derart platziert, dass bei einer temperaturbedingten Krümmung des Gerätemoduls in Richtung der optischen Achsen von Sende- und Empfangspfad deren optische Achsen um den gleichen Betrag in die gleiche Richtung ausgelenkt werden.

In der Offenlegungsschrift WO 2007/028667 wird ein handhaltbares elektro-optisches Messgerät zur Abstandsmessung beschrieben, das einen Sendepfad mit einem optischen Sender und einem Empfangspfad mit zumindest einer Empfangsoptik zur Bündelung eines Messsignals in Richtung auf einen Empfänger aufweist. Ein gemeinsamer Optik-Trägerkörper weist dabei die Komponenten des Sende- und Empfangspfads auf.

Aus der DE 10 2010 062 161 ist ein handgehaltenes Laser-distanzmessgerät bekannt, welches mit einer Regelung zum Ausgleichen einer natürlichen Zitterbewegung (Tremor) ausgestattet ist. Dazu wird ein Optik-Aktor eingesetzt, der die gesamte Optikeinheit verdreht. Die Optikeinheit wird dabei aus der Ausgangsposition in eine veränderliche Kompensationsposition derart verdreht, dass der Sendepfad im ausgekoppelten Bereich außerhalb des Messgeräts unter Kompensation der Bewegung des Gehäuses während der Messung raumfest stabilisiert wird.

DE 10 2012 112 940 zeigt ein handgehaltenes Laserdistanzmessgerät, mit zumindest einer Lasereinheit, die dazu vorgesehen ist, zumindest einen Laserstrahl in einer zumindest in einer Messebene veränderbaren Relativrichtungen auszusenden, sowie mit zumindest einer Empfangseinheit, die dazu vorgesehen ist, zumindest einen Teil des von einer zu vermessenden Fläche reflektierten Lichts des Laserstrahls zu erfassen. Dabei weist die Empfangseinheit eine Zylinderoptik mit zumindest einer sphärischen und/oder asphärischen Zylinderlinse auf.

Mit einem Handmessgerät der vorliegenden Erfindung wird ein Messziel oder Messpunkt dabei von Hand angezielt - also durch Handhaltung des Handmessgeräts und händische Ausrichtung der Lasermessachse auf einen gewünschten Zielpunkt, wie etwa in WO 2007/014 812, DE 10 2005 037 251, DE 10 2010 062 172 JP2003302209, US2003098973, US2011066399, etc. Diese stehen damit im Gegensatz zu nicht erfindungsgemässen, fix stationierten und meist motorisch bewegten Lasers-Tachymetern, referenzlinienprojizierenden Geräten, Laser-Scannern, Totalstationen, etc., welche beispielhaft etwa in EP 1 890 168, EP 2 053 353, EP 3 091 333, DE 196 48 626, WO 2010/092 087 oder anderen gezeigt sind, und bei welchen die Distanzmessstrahlung um zwei zueinander senkrechte Achsen, welche mit Winkelmessern ausgestattet sind, schwenkbar ist.

Bezüglich der mit den erfindungsgemässen Handgeräten meist durchgeführten Aufgaben zur Vermessung von Konstruktionen ist vielfach ein wesentlicher Aspekt, dass eine Vielzahl der signifikanten, zu vermessenden Raumpunkte miteinander durch Ecken, Kanten oder dergleichen verbunden bzw. durch diese begrenzt sind. Beispielsweise verbindet eine Kante, welche eine Wand eines Raumes von der Decke trennt, zwei Eckpunkte des Raumes. Sollen beispielsweise alle vier Eckpunkte der Decke eines Raumes mit rechteckigem Grundriss vermessen werden, so kann mit dem Konstruktionsvermessungs-Handgerät ein Eckpunkt nach dem anderen vermessen werden, indem diese manuell mit dem Messlaser oder einem mit diesem im wesentlichen zusammenfallenden Pilotstrahl angezielt werden. Dabei werden die zu vermessenden Raumpunkte vom Benutzer des Geräts von Hand angesteuert und gemäss einer Ausführungsform kann dann aus den dabei resultierenden Vermessungsdaten - optional gemeinsam mit einem vorgegebenen Relativbezug zwischen den Raumpunkten - ein Vermessungsergebnis bestimmt werden, wobei letztere Auswertung oder zumindest Teile davon oft auch nachgängig in einem Büro und nicht direkt am Ort der Vermessung durchgeführt wird.

Es ist dabei aber für einen Benutzer des Handgeräts oft durchaus anspruchsvoll oder schwierig, den gewünschten Messzielpunkt präzise mit dem Messlichtstahl des Handgeräts anzuzielen und exakt auf diesen Zielpunkt eine Messung auszulösen, speziell da der gewünschte Messpunkt vielfach etliche Meter entfernt liegt und der Messpunkt zudem für diese Entfernung verhältnismässig klein ist. Auch ein unruhiges Halten des Geräts, z.B. durch Tremor, Zittern, etc., kann dabei störend sein und oft auch die eigentlich vom Gerät an sich erzielbare Messgenauigkeit in der Praxis weiter reduzieren. Insbesondere bei Messungen im Aussenbereich kann dabei zudem hinzukommen, dass aufgrund des Umgebungslichtes der Messpunkt nicht mehr klar und eindeutig zu sehen ist. Digitale Sucherbilder von einer Kamera im Messgerät können (beispielsweise durch optisches und/oder digitales Vergrössern, Anzeigen eines Fadenkreuzes, Erkennung des Messlichts in den Bilddaten, etc.) teilweise Verbesserungen bringen, jedoch ist auch hier oft entweder ein zu grosser oder ein zu geringer Zoom-Faktor gegeben, um eine präzise handgehaltene Anzielung auf einen spezifischen, gewünschten Messzielpunkt durchzuführen.

Bei vielen Messungen, speziell im Baustellenbereich, kommt es dabei auch oft vor, dass erst bei einer späteren Auswertung und Nutzung der Messdaten im Büro festgestellt wird, dass alternativ oder zusätzlich eine Messung auf einen danebenliegenden Messpunkt erforderlich oder vorteilhaft gewesen wäre, um die Messung für die zu lösende Aufgabe zu komplettieren. Oft macht dies eine erneute Anfahrt und eine weitere Messung auf der Baustelle erforderlich.

Vielfach sind auch mehrere Messungen von einer Messgerätposition zu mehreren, oft nahe beieinanderliegenden Messpunkten erforderlich. Dieses verkompliziert nicht nur den Ablauf mit einer Vielzahl von Messungen, sondern birgt auch die Gefahr, dass die vielen, nahe beieinanderliegenden Messpunkte verwechselt oder vertauscht werden, oder auch einer der vielen Messpunkte vergessen oder ausgelassen wird.

Speziell sind beim Aufmessen im Konstruktions- oder Baubereich oftmals geometrische Features wie Kanten, Ecken, Ränder, Spitzen, Knicke, Rundungen, Rundstangen, Absätze, etc. wesentliche Merkmale, die es zu vermessen gilt. Jedoch sind in der Praxis gerade diese geometrischen Features oft schwierig anzuzielen, speziell mit einem handgehaltenen Messinstrument der vorliegenden Erfindung. Auch treten beim Anzielen von Ecken und Kanten auch oft schleifende Schnitte des Messlichts an geometrischen Features auf, oder es ergeben sich Mehrziel-Messungen, welche vom der Distanzmesseinheit des Messgeräts nicht oder nicht eindeutig lösbar sind. Speziell eine Verzerrung der Lichtpulse an einer Kante, bei welcher sowohl ein Teil des Vordergrunds der Kante als auch ein Teil des Hintergrundes der Kante (und eventuell gar auch noch ein Teil einer, den Vordergrund und Hintergrund verbindenden Fläche) vom Messlichtpunkt getroffen wird, erschwert die Messung und kann zu ungenauen oder gar falschen, oder zumindest nicht der Intention entsprechenden, Messergebnissen führen.

Es ist daher eine Aufgabe der vorliegenden Erfindung ein handgehaltenes Laserdistanzmessgerät zu verbessern, insbesondere im Hinblick auf zumindest eines der obengenannten Probleme. Auch soll die Methode zum Aufmessen mit derartigen Geräten und/oder die Auswertung der Messungen verbessert werden.

Mit Ausführungsformen der Verbesserung des handgehaltenen Laserdistanzmessgeräts soll dabei nicht nur z.B. die Aufgabe eine Verringerung von Messfehlern, Fehlmessungen und des Erfordernisses für ergänzende Zusatzmessungen erzielt werden, sondern es können z.B. auch zusätzliche, neuartige Messprinzipien und Messansätze mit dem erfindungsgemässen Handgerät erzielt werden.

Diese Aufgaben werden erfindungsgemäß durch die Merkmale der unabhängigen Ansprüche und/oder durch Merkmale der abhängigen Ansprüche gelöst bzw. diese Lösungen weitergebildet.

Die vorliegende Erfindung betrifft ein Laser-Entfernungsmessgerät in Form eines Handgeräts mit einem zur händischen Benutzung ausgebildetes Gehäuse. Das Handgerät ist dabei speziell für eine Handhaltung während der Benutzung - also z.B. dem Aufmessen von geometrischen Objekten, wie Räumen oder Raumbereichen, Baustellen, Möbeln, Konstruktionen, Zuschnitten, etc. - ausgebildet, und muss nicht zwingend auf einem Stativ oder dergleichen im Raum fix stationiert werden.

Im Gehäuse angeordnet ist dabei eine elektro-optische Entfernungsmesseinrichtung zur Ermittlung zumindest einer Messdistanz zwischen dem Laser-Entfernungsmessgerät und einem Zielobjekt in einer Messrichtung. Diese Entfernungsmesseinrichtung kann dabei beispielsweise ausgebildet sein mit einem Lichtemitter, insbesondere einer Halbleiter-Lichtquelle wie einer LED oder einem Halbleiter-Laser, zur Aussendung eines optischen Messlichtstrahls, und einem elektrischen Photoempfänger zur Detektion von Anteilen des optischen Messlichtstrahls, welche vom Zielobjekt reflektiert oder zurückgestreut werden. Eine Optikeinheit kann dabei insbesondere mit einer Sendeoptik mit einer Emissions-Kollimationslinse zur Kollimierung des ausgesendeten optischen Messlichtstrahls entlang einer Messachse in einer Messrichtung zum Zielobjekt, sowie einer Empfangsoptik mit einer Sammellinse zum Empfang der reflektierten oder zurückgestreuten Anteile aus einer Empfangsrichtung auf einem photoempfindlichen Bereich des Photoempfängers ausgebildet sein. Eine elektronische Auswerte- und Steuereinheit ist dabei zur Ermittlung von zumindest einer Messdistanz basierend auf den reflektierten oder zurückgestreuten Anteilen des optischen Messlichtstrahls nach einem Signallaufzeit- und/oder Phasenmessprinzip ausgebildet, beispielsweise anhand einer Messung einer Time of Flight Laufzeit von einem oder mehreren Pulsen des optischen Messlichtstrahls vom Gerät zum Zielobjekt und zurück, welche über die Lichtgeschwindigkeit proportional zur messenden Entfernung ist.

Eine Kamera im Gehäuse mit einem Blickfeld in Messrichtung ist dabei ausgebildet zur Aufnahme eines Bilds des Zielobjekts, welches Bild - neben einer Aussendung eines sichtbaren Lichtstrahls in Messrichtung - auch als elektronisches Sucherbild zur Anzielung des Zielobjekts oder Zielpunkts der Entfernungsmessung nutzbar ist. Als Bild in diesem Sinne kann dabei auch ein oder mehrere Bilder oder Bildausschnitte aus einem Video oder einer Live-Anzeige genutzt werden.

Entsprechend der Erfindung ist im Gehäuse des Handgeräts auch eine Ablenkeinheit zur Ablenkung, speziell zur Winkel-Ablenkung, der Messrichtung relativ zum Gehäuse, also speziell einer Ablenkung der Messachse, also von zumindest der Aussenderichtung des ausgesendeten optischen Messlichtstrahls. Diese Ablenkung erfolgt dabei mit einem aktiven Antrieb im Gerät, während des Betriebs des Handgeräts und nicht nur lediglich zur Justage oder Kalibrierung einer ansonsten fixen Messrichtung des Geräts. Die Ablenkung ist dabei in Ihrem Ausmaß eingeschränkt und befindet sich innerhalb zumindest eines Teilbereichs des Blickfelds der Kamera, welches Blickfeld nicht von der Ablenkeinheit abgelenkt wird. Eine am Gehäuse angeordnete Bedien- und Eingabeanordnung ist dabei zur Bedienung wenigstens der Entfernungsmesseinrichtung und der Kamera ausgebildet, beispielsweise mit einer am Gehäuse angeordneten, mit der Bedien- und Eingabeanordnung gekoppelte Sichtanzeige, auf welcher das Bild der Kamera als elektronischer Sucher, sowie ein Bedienzustand des Handgeräts und Messergebnisse des Handmessgeräts darstellbar sind.

Im Gehäuse angeordnet ist dabei ebenfalls eine Steuereinheit, welche derart zur Ansteuerung der Entfernungsmesseinrichtung und der Ablenkeinrichtung ausgebildet ist, dass entlang eines Messpfads der Ablenkung eine Serie von Messwerten der Messdistanz in unterschiedlichen Ablenkungen aufgenommen wird. Die Bedien- und Eingabeanordnung ist dabei entsprechend ausgebildet, um eine nachträgliche Selektion von einer oder mehreren der Messdistanzen aus der Serie von Messwerten durchzuführen.

Die Ablenkeinheit des Handgeräts kann dabei beispielsweise mit einem Ablenkbereich der Ablenkung ausgebildet sein, welcher auf einen Winkelbereich von weniger als +/- 10°, vorzugsweise von weniger als +/- 5°, limitiert ist. Das Handgerät ist also nicht mit einer Ablenkeinrichtung zur Erfassung eines im Wesentlichen ganzen oder halben Raumes oder dergleichen ausgebildet - also beispielsweise insbesondere kein klassischer Laserscanner oder Rotationslaser. Der Ablenkbereich der vorliegenden Erfindung kann beispielsweise im Wesentlichen dem Blickfeld der Kamera des elektronischen Suchers des Handgeräts oder einem, vorzugsweise zentralen, Teilbereich dieses Blickfelds entsprechen. Dabei kann auch die Sichtanzeige oder das Display zumindest einen Teil des Bilds der Kamera, überlagert mit einer Anzeige mehreren Messpunkten der Serie von Messwerten, als elektronisches Sucher-Bild darstellen. Beispielsweise kann die Sichtanzeige und deren Steuereinheit auch derart ausgebildet sein, dass das Bild der Kamera oder einen Ausschnitt daraus als Aufriss, sowie die Serie von Messwerten als dazugehöriger Grundriss dargestellt wird, in welchem Grundriss und/oder Aufriss zumindest eine Lage eines zu bestimmenden Messpunkts selektierbar ist.

In einer Ausführungsform kann die Ablenkeinheit eindimensional, also für die Ablenkung in nur einer einzigen Richtung, vorzugsweise entlang einer Geraden, ausgebildet sein. Neben einer hin- und zurück oder in einer Richtung, vorzugsweise wiederholt, durchlaufenen Geraden als Messpfad der Ablenkeinheit können auch andere Formen von Messpfaden, vorzugsweise von geschlossenen Messpfaden, bereitgestellt werden. In einer bevorzugten Ausführungsform kann beispielsweise auch von der Bedien- und Eingabeanordnung eine Auswahl zwischen einer herkömmlichen Punktmessung und zumindest einem abgetasteten Messpfad bereitgestellt werden. Die Bedien- und Eingabeanordnung kann dabei derart ausgebildet sein, dass die Serie von Messwerten zum Beispiel als ein lokaler Profilschnitt entlang eines Ablenkbereichs um den Messpunkt bereitgestellt wird, optional mit einem Polygonzug, welcher in die Serie von Messwerten interpoliert ist.

In einer anderen Ausführungsform kann die Ablenkeinheit für die Ablenkung in zweidimensionaler Richtung ausgebildet sein. Entsprechend kann die Bedien- und Eingabeanordnung derart ausgebildet sein, dass die Serie von Messwerten als eine lokale Punktwolke eines Ablenkbereichs um den angezielten Messpunkt bereitgestellt wird. In einer Ausführungsform kann dabei das Handgerät sowohl mit einem, gegenüber seinem Gehäuse richtungsfesten, sichtbaren Pilot-Lichtstrahl zur Anzielung eines Messpunkts ausgebildet sein, als auch mit einer Ablenkeinheit, mit welcher ein (vorzugsweise unsichtbarer) Messlichtstrahl des Entfernungsmessers gegenüber dem Pilot-Lichtstrahl in einer oder in zwei Raumwinkel-Richtungen ablenkbar ist.

In einer weiterführenden Ausführungsform kann am Gehäuse eine Inertial Measurement Unit (IMU) (oder ein Neigungs- oder Beschleunigungssensor und/oder ein Gyroskop oder Kompass) angeordnet sein, welche derart angeordnet und ausgebildet ist, um wahlweise Abhängig von dieser eine Ansteuerung der Ablenkeinheit durchzuführen. Anhand der Messwerte der IMU wird dabei beispielsweise die Ablenkeinheit derart angesteuert, dass die Ablenkung des Messlichts im Ablenkbereich in einer definieren Richtung erfolgt, etwa vorzugsweise definiert in einer horizontalen oder vertikalen Richtung. In einem anderen Beispiel können mehrere der Serien von Messwerten eine globale Punktwolke bilden, welche grösser als der eigentliche Ablenkbereich der Ablenkeinheit ist. Derartiges kann etwa erfolgen, indem für die globale Punktwolke jeweils entsprechend einer, zu den jeweiligen Distanz-Messwerten der Serie von Messwerten zugehörigen, von der IMU bestimmten Ausrichtung des Handgeräts und einer zugehörigen Richtung der Ablenkung der Ablenkeinheit zusammengeführt wird, um einen Punkt der Punktwolke in seiner räumlichen Lage zu bestimmen.

Die Erfindung betrifft dabei auch ein zugehöriges Verfahren zum Aufmessen von Baukörpern oder Räumen mit einem handgehaltenen Laser-Entfernungsmessgerät, vorzugsweise wie hier beschrieben, insbesondere mit zumindest einem elektro-optischen Entfernungsmesser, einer Kamera, einem Display und einer Ablenkeinheit für eine Messstrahlung des Entfernungsmessers.

Im Verfahren erfolgt dabei ein Auswählen eines Messmodus, anhand welchem ein automatisches Ansteuern der Ablenkeinheit erfolgt und einem händischen, vorzugsweise freihändigen, Anzielen eines Messpunktes mit einer Zielachse der Messstrahlung des handgehaltenen Laser-Entfernungsmessgeräts. Beim Auslösen einer Messung, erfolgt dabei ein automatisches Ablenken der Messstrahlung durch die Ablenkeinheit anhand des Messmodus, zur Bestimmung einer Serie von Messwerten in einem Umfeld um den Messpunkt entlang eines Messpfads entsprechend des gewählten Messmodus bei verschiedenen Ablenkungen. Dabei ist vorzugsweise auch der Messpunkt an sich ein Punkt der Serie von Messwerten. Entsprechend erfolgt ein Speichern der Serie von Messwerten für diesen Messpunkt für eine nachfolgende Auswertung des Messpunkts, welches optional mit einem nachträglichen Selektieren eines oder mehrerer der Messwerte aus der Serie der Messwerte, oder optional auch eines zwischen diesen Messwerten interpolierten Werts, als Messergebnis. In anderen Worten wird also nicht nur der angezielte Messpunkt an sich, sondern zusätzlich auch eine limitierte Umgebung oder unmittelbare Nachbarschaft des Messpunkts von Handgerät erfasst und bei der Auswertung der Messung bereitgestellt.

Dabei kann ein Auswählen des Messmodus aus zumindest einem von zumindest:
▪ einem Horizontal-Profilmessmodus, bei welchem das Ablenken entlang einer im wesentlichen horizontalen Geraden als Messpfad erfolgt,
▪ einem Vertikal-Profilmessmodus, bei welchem das Ablenken entlang einer im wesentlichen vertikalen Geraden als Messpfad erfolgt,
▪ einem Freirichtungs-Profilmessmodus, bei welchem das Ablenken entlang einer, via Bedieneinheit oder durch entsprechende Haltung des Handgeräts wählbaren Geraden als Messpfad erfolgt,
▪ einem Kreuz-Profilmessmodus, bei welchem das Ablenken entlang zweier 90° zueinanderstehenden Geraden als Messpfad erfolgt,
▪ einem Kreis-Erfassungsmodus, bei welchem das Ablenken entlang eines Kreises oder einer Ellipse als Messpfad erfolgt,
▪ einem Blickfeld-Flächenerfassungsmodus, bei welchem das Ablenken in zwei Dimensionen über eine Fläche bzw. einen Raumwinkel erfolgt, welcher im Wesentlichen mit dem Blickwinkel der Kamera übereinstimmt, oder
▪ einem Auswahlbereich-Flächenerfassungsmodus, bei welchem das Ablenken in zwei Dimensionen über eine Fläche bzw. einen Raumwinkel erfolgt, welcher mit einen vorzugsweise zentralen, Teilbereich des Blickwinkels der Kamera übereinstimmt,
erfolgen.

Der Messpfad kann dabei in einer Ausführungsform beispielsweise als eine Gerade ausgebildet sein, und die Serie von Messwerten kann einen Profilschnitt um den Messpunkt ausbilden. Dabei kann insbesondere eine horizontbezogene Orientierung der Gerade am Gerät anzeigbar sein, oder eine solche horizontbezogene Orientierung kann von der Ablenkeinheit entsprechend einer Vorgabe automatisch eingehalten werden. In einer anderen Ausführungsform kann der Messpfad einen Kreisring, ein Ellipsoid, ein Kreuz, eine Linie, etc. ausbilden, vorzugsweise wobei der Messpfad als zumindest Teil eines geschlossenen Pfads durch die Ablenkeinheit abgefahren wird.

In den Profilschnitt kann dabei beispielsweise ein Polygonzug oder Streckenzug mit zumindest einer Geraden von einer Recheneinheit automatisch eingepasst werden, wobei der Polygonzug als Messergebnis zur Auswertung auf einer Sichtanzeige bereitgestellt wird.

In einer Ausführungsform kann der Messpfad als ein zweidimensionaler Scann-Pfad eines Raumwinkel- bzw. Flächenbereichs ausgebildet sein, insbesondere als ein sukzessives zeilenweises Raster-Scannen oder ein Zick-Zack-Scannen. Das Messergebnis des Messpfads kann dabei beispielsweise als eine lokale Punktwolke um den Messpunkt bereitgestellt werden. Vorzugsweise können dabei geometrische primitive wie Geraden, Polygonzüge, Kreisbögen, ebene Flächen, Quader, Zylinder von einer Recheneinheit automatisch oder semi-automatisch in der lokalen Punktwolke und/oder im Bild der Kamera erkannt und/oder in die lokale Punktwolke eingepasst werden. Beispielsweise kann dabei zumindest teilweise ein maschinengelerntes Künstliches Intelligenz-System zum Einsatz kommen.

In anderen Ausführungsformen kann etwa auch ein Parallel-, Dreiecks- oder Sinus-Scannen des Flächenbereichs erfolgen. Alternativ kann auch ein Lissajous Scan (oder entlang eines anderen kontinuierlichen, sich über viele Zyklen nicht wiederholenden Pfads) durchgeführt werden, dessen Punktdichte sich zunehmend mit der Scan-Dauer verfeinert.

Speziell kann abhängig von einer Dauer eines (z.B. mittels einer IMU bestimmten) ruhigen Haltens des Handgeräts eine Dauer des Scann automatisch bestimmt werden. Beispielsweise kann bei einer numerischen Kompensierbarkeit eines unruhigen Haltens des Handgeräts ein Kompensieren einer Winkelposition der Messwerte der Serie erfolgen. Alsbald aber diese unruhige Haltung nicht mehr kompensierbar ist, kann die Messung abgebrochen werden. Ein derartiges Kompensieren kann dabei passiv, also numerisch, und/oder aktiv, also durch Ansteuern der Ablenkeinheit erfolgen. Die Ablenkeinheit ist aber erfindungsgemäss derart ausgebildet eine gezielte Ablenkung der Messrichtung zu bewirken und nicht lediglich um Verwacklungen zu kompensieren, was beispielsweise auch an einem vergleichsweise grösseren maximalen Ablenkbereich festgemacht werden kann.

In einer Ausführungsform kann während dem händischen Anzielen eine Grobmessung mit einer langsameren Ablenkung und/oder geringeren Distanzauflösung bzw. Distanzgenauigkeit und beim Auslösen eine Feinmessung mit einer gegenüber der Grobmessung schnelleren Ablenkung und/oder höheren Distanzauflösung erfolgen, wobei während des händischen Anzielens ein Anzeigen der Grobmessung und/oder eines in die Grobmessung gefitteten Polygonzugs mit einer Markierung eines aktuell angezielten Messpunkts an einem Display erfolgt, mit welchem ein spezifischer Messpunkt beim händischen Anzielen über grössere Entfernungen selektierbar ist.

Das händische Anzielen kann dabei über eine Sichtanzeige des Entfernungsmessgeräts als einem elektronischen Sucher erfolgen, welche Sichtanzeige auch den Messmodus und die Serie von Messwerten graphisch bereitstellt. Insbesondere dann dabei an der Sichtanzeige die Serie von Messwerten und/oder ein Messwert, welcher als Messergebnis genutzt werden soll, selektierbar und/oder editierbar sein. Dabei kann nach beenden des Anzielens ein nachträgliches Selektieren eines oder mehrerer der Messwerte aus der Serie der Messwerte oder eines zwischen diesen Messwerten interpolierten Werts als Messergebnis des Aufmessens erfolgen.

Das erfindungsgemässe Verfahren kann dabei auch zumindest teilweise als Computerprogrammprodukt mit Programmcode, der auf einem maschinenlesbaren Träger gespeichert ist, als festverdrahtete Logik ausgeführt ist oder als Computer-DatenSignal, verkörpert durch eine elektromagnetische Welle, bereitgestellt sein. Speziell in Form von Programmcode zur Durchführung von Teilen des obengenannten Verfahrens, insbesondere Programmcode zum Ansteuern einer Entfernungsmesseinrichtung und einer Ablenkeinheit in einem Hand-Entfernungsmessgerät, welches Ansteuern derart erfolgt, dass eine Serie von Messwerten in unterschiedlichen Ausrichtungen aufgenommen wird und im nachhinein eine Selektion eines spezifischen Messwerts aus dieser Serie von Messwerten als Messergebnis erfolgt. Vorzugsweise kann der Programmcode dabei in einer Steuereinheit eines als Handgerät ausgebildeten Entfernungsmessgeräts gespeichert und/oder ausgeführt werden.

Das erfindungsgemäße Verfahren und die erfindungsgemäße Vorrichtung werden nachfolgend anhand von, in den Zeichnungen schematisch dargestellten, konkreten Ausführungsbeispielen rein beispielhaft näher beschrieben, wobei auch auf weitere Vorteile der Erfindung eingegangen wird. Im Einzelnen zeigen:
Fig. 1 eine Illustration einer exemplarischen Ausführungsform eines Handgeräts entsprechend der vorliegenden Erfindung;
Fig. 2 ein Block-Schema einer Ausführungsform eines erfindungsgemäßen Hand-Entfernungsmessgeräts;
Fig. 3 ein erstes Beispiel einer Anwendung eines erfindungsgemäßen Handgeräts zum Aufmessen;
Fig. 4 ein zweites Beispiel einer Anwendung eines erfindungsgemäßen Handgeräts;
Fig. 5a, Fig. 5b und Fig. 5c eine Darstellung von beispielhaften Anzeigen bei einem erfindungsgemässen Messverfahrens mit einem erfindungsgemässen Handmessgerät;
Fig. 6 ein drittes Beispiel einer Anwendung eines erfindungsgemäßen Handgeräts;
Fig. 7 ein viertes Beispiel einer Anwendung eines erfindungsgemäßen Handgeräts;
Fig. 8 ein fünftes Beispiel einer Anwendung eines erfindungsgemäßen Handgeräts;
Fig. 9 ein Blockdiagramm eines Beispiels einer erfindungsgemäßen Ausführungsform einer Methode entsprechend der vorliegenden Erfindung.

Die Darstellungen in den Figuren dienen lediglich zur Illustration und sind, sofern nicht explizit angegeben, nicht als exakt maßstäblich zu betrachten. Gleiche oder funktionell ähnliche Merkmale sind, insoweit praktikabel, durchgängig mit denselben Bezugszeichen versehen und werden gegebenenfalls mit einem Buchstaben als Index unterschieden. Die dargestellten Schemata zeigen jeweils die technische Grundstruktur, welche von einem Fachmann entsprechend allgemeinen Grundsätzen ergänzt oder modifiziert werden können. Die Ausdrücke "im wesentlichen" oder "substantiell" bringen zum Ausdruck, dass ein Merkmal im Sinne der Erfindung nicht zwingend zu 100% exakt erfüllt sein muss, sondern, dass auch kleinere Abweichungen auftreten können, speziell derart, dass die technische Wirkung des Merkmals im Sinne der Erfindung erhalten bleibt und/oder im Rahmen von üblichen Toleranzen und Ungenauigkeiten in der Ausführung oder Fertigung.

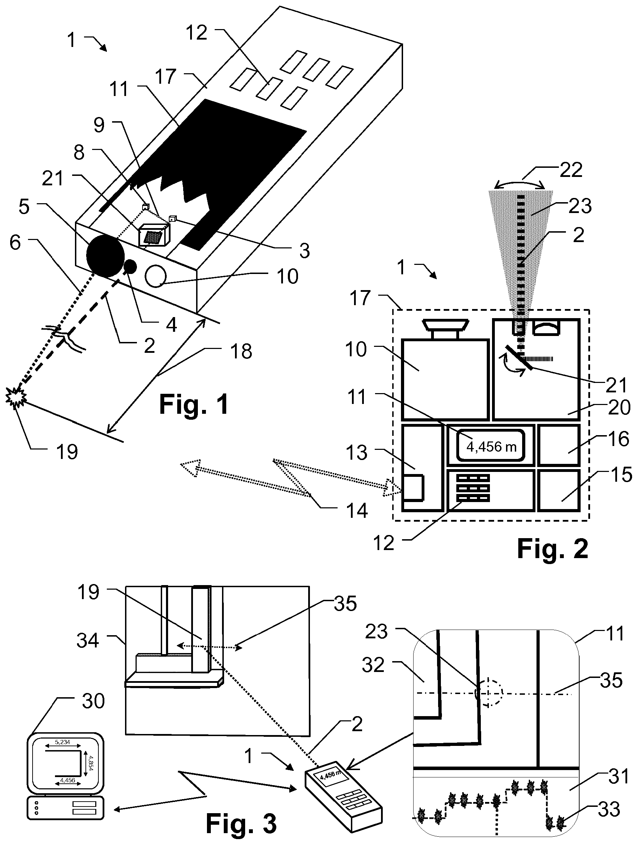

**Fig. 1** zeigt schematisch ein mögliches Beispiel einer Ausführungsform eines erfindungsgemässen Handgeräts 1. Gezeigt ist ein handgehaltenes Laserentfernungsmessgerät 1, welches mit einer internen Kamera 10 mit einem Blickwinkel in Messrichtung ausgebildet ist, mit deren Bild ein Messziel 19 der Entfernungsmessung anzielbar ist, welches Messziel 19 dann mit einem Lichtstrahl 2 der opto-elektrischen Laserentfernungsmessung in seinem Abstand 18 zum Gerät 1 bestimmt wird. Entsprechend der Erfindung weist das Handgerät 1 dabei eine während der Entfernungsmessung steuerbare Ablenkeinheit 21 auf, mittels welcher die Messrichtung der Laserentfernungsmessung in zumindest einem Teil des Blickwinkels der Kamera 10 entlang eines Messpfads definiert ablenkbar ist. Etwa indem die Ablenkeinrichtung 21 einen, von einem Lichtemitter 3 wie beispielsweise einer Laserdiode vorzugsweise kollimiert über eine Sendeoptik 4 ausgesendeten Lichtstrahl 2 der Laserentfernungsmessung entsprechen eines Ansteuersignals der Ablenkeinrichtung 21 in unterschiedliche Richtungen ablenkt.

In dieser Ausführungsform werden dann vom Zielpunkt 19 zurückgeworfene Anteile 6 des Lichtstrahls 2 über eine Empfangsoptik 5 auf ein photo-sensitives elektrisches Bauteil 8 geleitet. Damit ist aus einer Signallaufzeit des Lichts 2,6 zwischen Emission und Empfang entsprechend der Ausbreitungsgeschwindigkeit des Lichts eine Distanz 18 zum Zielobjekt 19 ermittelbar. Hier gezeigt ist auch ein optionaler interner Referenzpfad 9 für einen Teil des emittierten Lichts.

Obengenannte Komponenten (mit Ausnahme des Zielobjekts 19) sind dabei im für den Messvorgang handhaltbar ausgebildeten Gehäuse 17 untergebracht. Das Gehäuse weist dabei auch eine Bedien- und Kontrolleinheit auf, beispielsweise mit einer Sichtanzeige 11 oder einem Display und Bedienelementen 12, wie etwas Taster, einem Touchscreen, kapazitiven Sensoren, Gestenerkennung, etc. auf.

In **Fig. 2** ist nochmals eine schematische Darstellung eines erfindungsgemäßen Handgeräts 1 dargestellt. Bezüglich der Komponenten sei dabei und im Folgenden auch auf die Beschreibung zu Fig. 1 verwiesen. Im Gehäuse 17 ist dabei die Kamera 10, z.B. in Form eines CCD oder CMOS Bildsensors mit entsprechender Optik und die Entfernungsmesseinheit 20 gezeigt, sowie auch eine Bedieneinheit 12, eine Sichtanzeige 11, eine Steuereinheit 16 und eine Auswerteinheit 15. Optional kann im Handgerät 1 auch eine Kommunikationseinheit 13 zur kabelgebundenen, kabellosen oder über Speichermedien erfolgenden Kommunikation 14 mit externen Geräten vorhanden sein.

Die Ablenkeinheit 21 im Gehäuse 17 kann dabei in einer Ausführungsform ausgebildet sein, um nur die Emissionsrichtung 2 des Entfernungsmessers 20 wie mit den Pfeilen 22 angedeutet kontrolliert zu verändern, wobei die Empfangseinheit des Entfernungsmessers 20 ist dabei entsprechend ausgebildet, um Rückstreuungen aus dem gesamten möglichen Ablenkbereich 23 der Ablenkeinheit 21 zu empfangen. Beispielsweise kann dieses mit einer entsprechend ausgebildeten Empfangsoptik, welche stets den gesamten Ablenkwinkelbereich 23 auf einen Erfassungsbereich eines photosensitiven Bauelements lenkt, erfolgen.

In einer anderen Ausführungsform kann neben der Emissionsrichtung 2 auch eine Empfangsrichtung 6 durch das Ablenkelement 21 beeinflusst werden, sodass auch der Empfänger stets auf den vom Sender angezielten Messpunkt 19 zielt. In einer beispielhaften Ausführungsform kann dabei die Empfangseinheit 8 beispielsweise auch mit Photodetektoren mit interner Verstärkung, z.B. einem Spad-Array ausgebildet sein.

Das Ablenken 22 kann dabei insbesondere in Form einer Transmission durch - oder in Form einer Reflexion an - einem optischen Bauelement im entsprechenden Strahlengang erzielt werden. Das Blickfeld einer optional vorhandenen Kamera 10 im Gerät 1 ist dabei aber stets getrennt von der Ablenkeinheit 21 und ist ablenkungsfrei in eine, bezüglich des Geräts 1 fixe Messrichtung gerichtet - es erfolgt also kein Ablenken des Blickfelds der Kamera 10 durch die Ablenkeinheit 21.

Bezüglich der Ablenkeinheit 21, welche hier symbolisch in Form eines Drehspiegels illustriert ist, können für das Prinzip der Erfindung grundsätzlich unterschiedliche Ausführungsformen eingesetzt werden, etwa:
- ein rotierendes Polygonrad oder eine anderes Multi-Facetten-Bauelement in Reflexion oder Transmission,
- ein Drehspiegel,
- ein Drehspiegel auf Achse mit Tilt wie z.B. ein Nutating mirror, Palmer-Scanner, etc.,
- Oszillierender Spiegel mit einer oder mit zwei Drehachsen oder mit ein- oder zweiachsigem Flexture oder Gimbal,
- ein MEMS-Spiegel,
- ein drehendes Doppelkeil-System,
- ein beweglicher Lichtleiter,
- eine Flüssiglinse oder elastische Linse (auch Liquid Lens oder Elastic Lens),
- eine bewegliche Linse oder ein bewegliches Linsenpaar z.B. auch über Flextures,
- ein elektrooptischer Modulator,
- ein akustooptischer Modulator,
- ein Multibeam Ansatz mit einer Anordnung von mehreren Sendeelementen mit jeweils unterschiedlichen Emissionsrichtungen, beispielsweise in einer Linie oder einem 2D-Array oder ein Hologramm kann als eine alternative Ausführungsform zu einer Ablenkeinheit ausgebildet werden.

Die Sendeeinheit kann beispielsweise auch mit einem LCD als Ablenkeinheit 21 ausgebildet sein, welches durch Anlegen einer elektrischen Spannung eine optische Keilwirkung erzeugt, da dabei resultierende unterschiedliche Brechungsindizes im LCD unterschiedliche Ablenkungen 22 eines, das LCD durchdringenden Strahlengangs bewirken. Eine Ausführungsform mit einer Ablenkeinheit 21 mit einem MEMS-Spiegel kann aufgrund seiner Baugröße und relativ einfachen Ansteuerbarkeit für ein handgehaltenes Gerät 1 eine bevorzugte Ausführungsform darstellen. Alternativ zu einer stufenlosen Ablenkung kann auch eine Ablenkung in diskreten Stufen erfolgen.

Speziell kann dabei auch ein Zusammenhang zwischen den Entfernungsmesspunkten und deren Ablenkung 22 und Pixel-Koordinaten der Kamera 10 erfasst werden oder bekannt sein. Damit kann beispielsweise eine aktuelle Ablenkung 22 der Ablenkeinheit 21 ermittelt werden und/oder Raumkoordinaten der Entfernungsmesspunkte 19 ermittelt werden, insbesondere mit einem Distanzmesswert der Entfernungsmessung und ein- oder zweidimensionaler Raumrichtung der Ablenkung 22.

In der in **Fig. 3** dargestellten Ausführungsform ist beispielsweise ein Messpfad 35 der Ablenkeinheit 21 im Gerät 1 als eine Gerade ausgebildet, entlang welcher der Messlichtstrahl 2 oszilliert. Dabei werden entlang des Messpfads 35 eine Vielzahl von Entfernungsmesspunkten 33 bestimmt, wobei das anzielte Messziel 19 vorzugsweise im wesentliche in der Mitte der Gerade liegt und vorzugsweise einen der Vielzahl von Entfernungsmesspunkten ausmacht. Links ist dabei das Gerät 1 und ein mit diesem freihändig angezielter Messpunkt 19 an einem Fenster in einem Raum 34 gezeigt - rechts ein Beispiel einer Anzeige 11 auf einem Display des Geräts 1, im welchem unter anderem zumindest ein Teil eines Bilds 32 der Kamera 10 des Geräts 1 als elektronischer Sucher dargestellt ist.

Dabei wird eine Messung eines Profilschnitts 31 in einer Umgebung des Messziels 19, welches mit der Zielachse 23 angezielt wird, bewirkt - wie dieser im unteren Bildschirmbereich, sozusagen als Grundriss zum Kamerabild 32 oben, dargestellt ist. Dabei kann erfindungsgemäß, auch bei dem recht komplex strukturierten Messziel 19 bei händischer Anzielung ein gewünschter Messpunkt aufgemessen werden, oder es können auch in einer einzigen Messung mehrere, nahe beieinanderliegende Messpunkte aufgemessen werden. Dabei können erfindungsgemäß die Anforderungen an die Anzielung gesenkt werden, da hierbei auch erst nach erfolgter Messung einer der Messpunkte der aufgenommenen Serie 33 von Messwerten entlang des Messpfads 35 als gewünschter Messpunkt mit seinem Distanzwert selektiert werden kann. Optional kann dabei allenfalls auch ein zwischen den tatsächlich aufgenommenen Punkten der Serie 33 liegender, interpolierter Zwischenpunkt nachträglich als Messpunkt ausgewählt werden. Damit können nicht nur ungenaue Anzielungen korrigiert werden, sondern es können optional auch danebenliegende, ebenfalls relevante Messpunkte mit nur einer Messung ermittelt werden, was oft ein praktischer Anwendungsfall einer Messung ist.

Damit kann beispielsweise nach Abschluss der Messung durch das handgehaltene Entfernungsmessgerät 1 auch eine andere oder weitere Distanz im Nahbereich des eigentlich angezielten Messziels 19 extrahiert und bereitgestellt werden. Beispielsweise kann dies in einem zugehörigen Bild 32 der Kamera 10 erfolgen, und/oder in einem dargestellten Profilschnitt 31 der Entfernungsmesspunkte 33. Dabei kann z.B. ein Touchscreen, ein Cursor oder ähnliches zum Einsatz kommen. Neben einer Auswahl des Messpunkts am Gerät 1 kann dieses auch auf einem externen Gerät wie einem PC 30 oder Tablet-PC erfolgen.

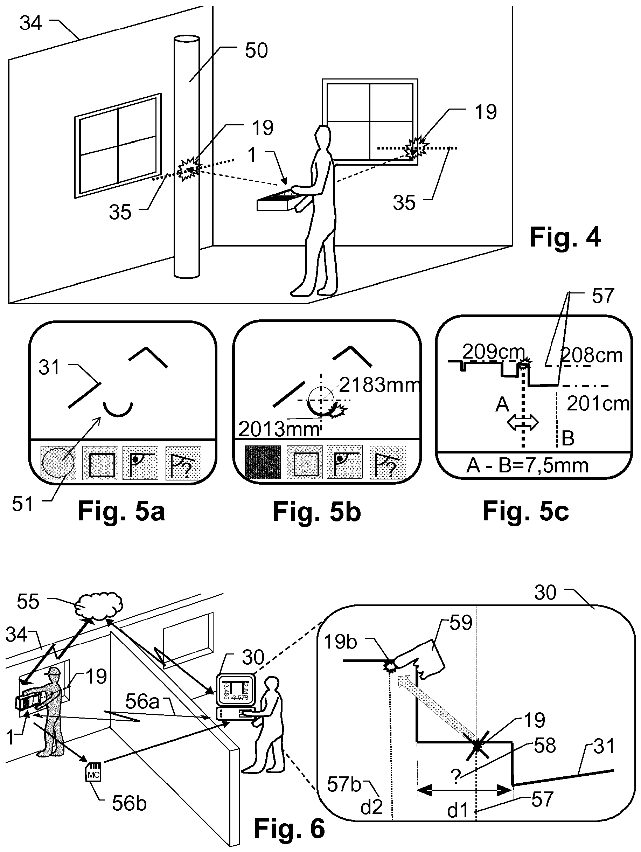

Wie in **Fig. 4** gezeigt, enthalten beispielsweise viele aufzumessende Features am Bau wie z.B. Einbauleibungen, Fensterrahmen, Türstöcke, Nischen, etc. oft in nahem räumlichen Zusammenhang mehrere, für eine Planung relevante, geometrische Merkmale, welche bis anhin einzeln vermessen und in Zusammenhang gebracht werden mussten, was oft aufwändig und fehleranfällig ist. Zudem ist - insbesondere über grössere Messdistanzen - ein Anzielen eines spezifischen Features, beispielsweise in einer Fensterleibung mit mehreren Abstufungen und Kanten, durch eine händische Anzielung oft schwierig oder kann zu ungewollten Fehlmessungen führen. Entsprechend der vorliegenden Erfindung kann dabei auch ein nachträgliches Korrigieren oder Selektieren des Messpunkts z.B. auf ein spezifisches Feature wie beispielsweise eines minimalen oder maximalen Abstandes bestimmt werden.

Beispielsweise kann eine runde Säule 50 erfindungsgemäß in ihrem Schnittprofil vermessen werden, und dabei - ohne Notwendigkeit einer exakten händischen Anzielung - ein nächstliegender Punkt dieser Säule 50, oder optional deren Durchmesser und/oder Mittelachse, etc. vermessen werden.

Damit kann beispielsweise nach Abschluss der Messung durch das handgehaltene Entfernungsmessgerät auch eine andere oder weitere Distanz im Nahbereich des eigentlich angezielten Messziels 19 extrahiert und bereitgestellt werden. Beispielsweise kann dies in einem zugehörigen Bild der Kamera erfolgen, und/oder in einem dargestellten Profilschnitt der Entfernungsmesspunkte. Wie in **Fig. 5a** und **Fig. 5b** gezeigt, kann dieses dabei beispielsweise mit einem automatischen Erkennen eines halbkreisförmigen Elements in der aufgenommenen Serie von Messwerten des Profils 31 erfolgen, oder durch eine manuelle Auswahl eines Templates 51 einer runden Säule an dieser Stelle, welches Template dann manuell, semiautomatisch oder automatisch im Profil eingepasst werden kann. Ein anderes Beispiel unter vielen wäre auch etwa eine Rundung oder Fase an einer Kante oder eine Kante selbst, welche ebenfalls in analoger Weise z.B. als 90° Kreisbogen, 45°Abschrägung oder 90°Ecke erkannt und im Aufmass entsprechend berücksichtigt werden kann.

Wie in **Fig. 5c** gezeigt, können bei einer Auswertung speziell auch lokale und/oder globale Maxima und/oder Minima der Entfernungsmesspunkte ermittelt und bereitgestellt werden. Anhand dieser Maxima und/oder Minima könne dann durch den Benutzer und/oder eine Recheneinheit Merkmale wie Ecken, Kanten, etc. detektiert und/oder klassifiziert und somit vermessen werden. Auch können beispielsweise Polygonzüge oder andere geometrische Grundelemente wie Kreisbögen, Rechtecke, Trapeze, Radien, etc. in die Serie 33 der Entfernungsmesspunkte gefittet werden, speziell da viele der zu vermessenden Merkmale aus derartigen Grundelementen zusammengesetzt sind, oder zumindest sein sollten.

Dabei werden aber nicht nur jeweils die Endpunkte der Geraden vermessen und eine Strecke zwischen diesen berechnet, sondern auch zumindest ein, vorzugsweise eine Vielzahl von Punkten dazwischen werden vermessen, sodass eine Art Profilschnitt entsteht.

Die Ablenkeinheit 21 kann in einer Ausführungsform dabei derart ausgebildet sein, dass diese durch deren Ansteuerung oder durch einen Positionsgeber einen Wert ihrer aktuellen Ablenkung bereitstellt. Alternativ kann in einer anderen Ausführungsform ein Wert der aktuellen Ablenkung auch durch ein Auswerten der Lage eines projizierten Lichtflecks der optischen Messstrahlung im Bild der Kamera bestimmt werden.

In einer Ausführungsform kann der Messpfad dabei als eine Gerade ausgebildet sein, entlang welcher der Lichtstrahl oszilliert und entlang welcher eine Vielzahl von Entfernungsmesspunkten bestimmt werden, wobei das angezielte Messziel vorzugsweise im wesentlichen in der Mitte der Gerade liegt und einen der Vielzahl von Entfernungsmesspunkten ausmacht. Dabei wird eine Messung eines Profilschnitts in einer Umgebung des Messziels bewirkt. In einer speziellen Ausführungsform kann dabei vom Gerät wahlweise zumindest einer der Messmodi eines Messmodus einer ausrichtbaren Geradenablenkung, einer horizontalen Geradenablenkung, einer vertikalen Geradenablenkung, einer kreuzförmigen Geradenablenkung, einer kreisförmigen oder ellipsenförmigen Linienablenkung, einer parallelen Flächenablenkung einer Zick-Zack Flächenablenkung einer Sinus-Flächenablenkung oder einer Lissajous Flächenablenkung bereitgestellt werden. Als Messergebnis wird dabei die Vielzahl von Entfernungsmesspunkten gespeichert und/oder zur weiteren Verarbeitung bereitgestellt.

Wie in **Fig. 6** gezeigt, kann bei einer, nach einer Ausführungsform der Erfindung erfolgten Messung mit dem handgehaltenen Gerät 1, auch ein anderer Punkt 19b im Blickfeld der Kamera 10 ausgewertet werden, als der eigentlich zentral angezielte Messpunkt 19. Dies kann dabei nicht nur während der Messung im Feld, sondern auch im nachhinein erfolgen. Beispielsweise kann nach Anzielen und Auslösen der Messung das handhaltbare Entfernungsmessgerät 1 wieder bequem und ohne Anzielung in die Hand genommen werden, und an dessen Display ein anderer oder zusätzlicher Messpunkt als Messergebnis gewählt werden. Alternativ kann ein derartiges Auswählen auch an einem externen Gerät 30, z.B. einem stationären oder mobilen Computer, einem Tablet-PC, einem Smartphone, etc. erfolgen, zu welchem die Messdaten, insbesondere die Serie von Entfernungs-Messwerten 33 und/oder das zugehörige Bild 32 der Kamera, online 56a, offline 56b, über Kabel oder kabellos, oder über einen Cloud-Service 55 übertragen werden. Dabei kann auch zumindest ein Teil der Auswertung z.B. mit einem künstlichen Intelligenz System (AI), automatisiert werden, beispielsweise indem eine automatische Identifikation und/oder Klassifikation der Bild- und/oder Entfernungsmesswerte durch einen Computer 30 erfolgt, und deren Ergebnisse dem Benutzer bereitgestellt werden. Dieses kann im handgehaltenen Gerät 1, im externen Gerät 30 und/oder im Cloud-Computation-System 55 erfolgen, und kann z.B. gegenüber einem ebenfalls möglichen, klassischen Fitting von Polygonzügen vorteilhaftere und/oder genauere Messergebnisse für den Benutzer liefern. Eine derartige automatische, vorzugsweise AI-unterstützte, Auswertung kann dabei insbesondere transparent für den Benutzer im Hintergrund erfolgen, ohne dass dieser in diesen automatischen Prozess eingreift, oder dessen gewahr ist. Ein erfindungsgemässes handgehaltenes Laserentfernungsmessgerät 1 ist dabei zumindest dazu ausgebildet um die Serie von Messwerten 33 und/oder einen davon abgeleiteten Polygonzug 31 sowie ein zugehöriges Kamerabild bereitstellen und/oder zu speichern, kann aber optional auch zumindest einen Teil der beschriebenen Funktionalitäten zur Auswertung direkt am Gerät 1 bereitstellen.

Bei Zittern oder Verwackeln während des Auslösens der Messung oder auch bei der Anzielung komplexer geometrischer Strukturen, kann erfindungsgemäß beispielsweise ein gewünschter Messpunkt in der Umgebung des angezielten Punkts 19 erst im nachhinein exakt festgelegt werden. Das Gerät 1 kann dabei optional mittels eines Bewegungssensors (wie z.B. einer IMU) ein Verwackeln detektieren, und den Benutzer automatisiert darauf hinweisen, im besonderen Masse den Messpunkt zu kontrollieren. In einer Ausführungsform kann dabei auch eine Recheneinheit im Gerät 1 derart ausgebildet sein, eine automatische Analyse der aufgenommenen Serie von Messwerten 33 durchzuführen, bei welcher Analyse erkannt wird, ob um den angezielten Messpunkt 19 eine bezüglich der Entfernungsmessung eindeutige Situation vorliegt. Beispielsweise ob eine Umgebung des Messpunkts 19 in der aufgenommenen Serie von Messpunkten 33 (zumindest im wesentlichen) flach bzw. gerade ausgebildet ist, und somit wahrscheinlich keine Fehlanzielung vorliegen kann und der aufgenommene Messwert somit mit hoher wahrscheinlich auch dem gewünschten Messwert entspricht. Liegen aber beispielsweise Singularitäten in der Serie von Messwerten 33 vor, weist eine differentielle Betrachtung der Serie von Messwerten 33 signifikante Ausschläge auf, oder lässt sich in anderer Weise (z.B. auch mit einem KI-System) aus der Serie von Messwerten 33 schliessen oder mit hinreichender Wahrscheinlichkeit abschätzen, dass eine Umgebung um den Zielpunkt 19 potentielle zu einer Fehlmessung und/oder unsicheren Anzielung führen könnte - etwa da ein gestuftes Profil vorliegt - so kann die Recheneinheit dies aus den Messwerten 33 ermitteln und einen entsprechenden Hinweise bereitstellen, etwa indem der Messwert beim Speichern entsprechend markiert wird und/oder ein Benutzer des Geräts 1 zu einer interaktiven Verifikation des Messwerts 19 und/oder zu einer allfälligen Anpassung dieses aufgefordert wird. Dabei kann das Gerät 1 nach der Messung z.B. einen aufgenommenen Profilschnitt 31 am Display darstellen, auf welchem der aktuell gewählte Messpunkt 19 markiert ist, und die Funktionalität bereitstellen, diesen Messpunkt 19 im Profilschnitt 31 nötigenfalls zu verschieben. Der Profilschnitt 31 kann dabei als Rohdaten der Serie von Messwerten 33 und/oder in interpolierter/abstrahierter Form, etwa wie gezeigt als Polygonzug dargestellt werden, optional gemeinsam mit einer Anzeige eines zugehörigen, vom Gerät 1 aufgenommenen Kamerabilds, welches dem Benutzer die Orientierung erleichtert.

Im gezeigten Beispiel erfolgt eine Nachbearbeitung der Messdaten von einem Handgerät 1 aus dem Feld an einem PC 30, beispielsweise um CAD-Produktionsdaten oder Daten für einen 3D-Drucker oder eine CNC-Maschine zu generieren bzw. einer aktuellen, tatsächlichen Baustellensituation anzupassen. Der in einem Gebäude 34 vom Benutzer händisch mit dem Gerät 1 angezielte und aufgenommene Messpunkt 19 ist dabei erfindungsgemäß mit einer Serie von Messwerten der Messdistanz in unterschiedlichen Ablenkungen um dem angezielten Punkt 19 aufgenommen worden. Wie rechts in der Figur gezeigt, kann bei der Extraktion bzw. Auswertung der Messwerte für die weitere Verarbeitung dann festgestellt werden, dass bei der Messung im Feld mit der händischen Anzielung eine Distanz d1 57 zu dem Punkt 19 ermittelt wurde, wohingegen für die Planung bzw. Fertigung eigentlich die danebenliegende Distanz d2 57b zu Punkt 19b von Bedeutung ist. Entsprechend der vorliegenden Erfindung kann nun der Benutzer in der Nachbearbeitung ein Verschieben 59 des Messpunkts in nahen, mit Hilfe der Ablenkeinheit ebenfalls aufgezeichneten Umgebung von Punkt 19, bzw. ein Selektieren eines oder mehrerer Messpunkte 19b in dieser Umgebung durchführen. Dabei können allenfalls auch trigonometrische Korrekturen der vom Entfernungsmesser 20 bestimmten Messdistanz entsprechend der zugehörigen Auslenkung der Ablenkeinheit 21 angewandt werden. Somit kann ohne erneute Messung am Gebäude 34 ein Messwert zum Punkt 19b genutzt werden. Optional kann während der Planungsphase eines Projekts am PC 30 auch die Notwendigkeit entstehen, das Mass 58 zu kennen, was entsprechend der vorliegenden Erfindung ebenfalls, zumindest mit eingeschränkter, aber für diese Aufgabe hinreichenden Messgenauigkeit, aus den bereits vorhanden Daten durch eine entsprechende Auswertung der aufgenommenen Serie von Messpunkten 33 ermittelbar ist, sodass auf eine zweite Messung im Feld 34 verzichtet werden kann. Beispielsweise kann somit vorab verifiziert werden, ob eine in der geplanten Konstruktion vorhanden Blende die (allenfalls ungeplante) Abstufung 58 auch hinreichend überdecken wird.

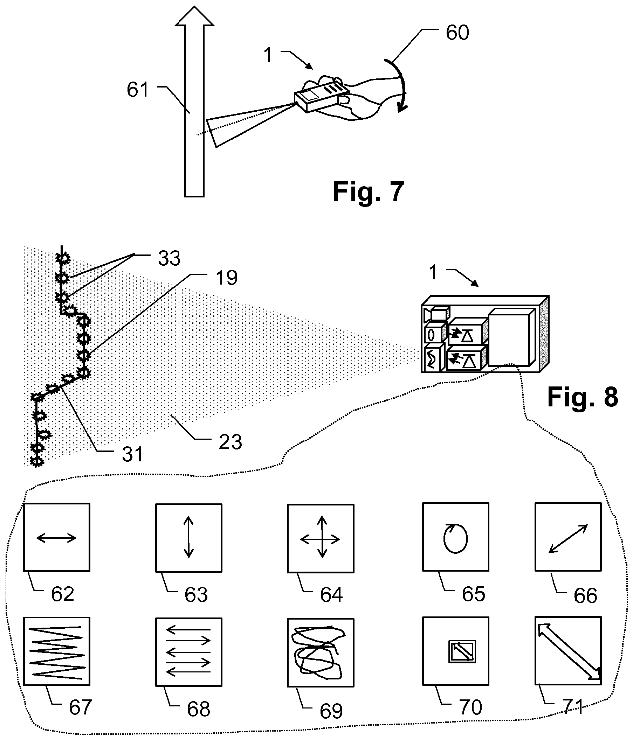

Wie in der Ausführungsform von **Fig. 7** illustriert, kann optional das handgehaltene Laserentfernungsmessgerät 1 während der Entfernungsmessung nicht nur im wesentlichen stabil zur Anzielung eines bestimmten Punkts gehalten werden, sondern auch, insbesondere im wesentlichen horizontal und/oder vertikal, vom handhaltenden Benutzer bewegt werden. Dabei kann beispielsweise mit einer IMU ( = Inertial Measurement Unit), speziell mit einem Neigungs- oder Beschleunigungssensor und/oder einem Gyroskop, eine räumliche Orientierung des handgehaltenen Laserentfernungsmessgeräts 1 zu jeder Entfernungsmessung - und somit auch eine räumliche Lage der Entfernungsmesspunkte 33 der Serie(n) - bestimmt werden. Damit kann beispielsweise eine lokal beschränkte Punktwolke um ein Messziel ermittelt werden, welche Messziel in diesem Falle auch eine spezifische Kante, Fläche, Ecke oder ähnliches sein kann.

In einer speziellen Ausführungsform kann beim handgehaltenen Laserentfernungsmessgerät 1 eine Art Dauerfeuermodus gewählt werden, in welchem zeitlich oder durch veränderte Gerätehaltung 60 ausgelöst, ein automatisches, sukzessives Auslösen der Erfassung von jeweils einer Serie 33 von Messwerten erfolgt. In Zusammenschau dieser Vielzahl von Serien 33 von Messwerten kann z.B. eine Punktwolke eines grösseren Raumbereiches 61 aufgenommen werden, als jenem, welcher durch die Ablenkeinheit in einer einzigen Serie 33 erzielbar ist, indem das händische Anzielen mit einer Bewegung 60 des Geräts 1 über einen gewünschten Raumbereich 61 während des Dauerfeuermodus durchgeführt wird. Beispielsweise kann in einer Ausführungsform der Messpfad der Ablenkeinheit als eine Gerade ausgebildet sein, und diese Gerade kann vom handhaltenden Benutzer im wesentlichen orthogonal zu einer aufzumessenden Kante geführt werden, währenddessen entlang der Gerade sukzessive Serien 33 von Messwerten aufgezeichnet werden. Diese Serien 33 könne dabei mit einer jeweils erfassten, zugehörigen räumlichen Orientierung des handgehaltenen Geräts 1 in Zusammenhang gestellt und gespeichert werden, speziell kann dabei z.B. die räumliche Orientierung mit einer IMU, einem Neigungssensor, mittels einer SLAM-Navigation im Kamerabild oder ähnlichem ermittelt werden.

In einer speziellen Ausführungsform von **Fig. 8** kann dabei vom Gerät 1 wahlweise zumindest einer der Messmodi eines Messmodus 62 bis 71 bereitgestellt werden. Beispielsweise mit zumindest einem Messmodus mit einem Messpfad mit: einer horizontalen Geradenablenkung 62, einer vertikalen Geradenablenkung 63, einer kreuzförmigen Geradenablenkung 64, einer kreisförmigen oder ellipsenförmigen Linienablenkung 65, einer ausrichtbaren Geradenablenkung 66, einer Zick-Zack-Flächenablenkung 67, einer parallelen Flächenablenkung 68, einer Sinus-Flächenablenkung oder einer Lissajous Flächenablenkung 69. Als Messergebnis wird dabei die Vielzahl von Entfernungsmesspunkten als Serie von Messpunkten 33 entlang des gewählten Messpfads ermittelt und gespeichert und/oder zur weiteren Verarbeitung bereitgestellt. Optional kann nicht nur die gesamte Serie 33 dauerhaft gespeichert werden, sondern es kann die Serie 33 dabei auch nur temporär gespeichert werden, und nach einer Selektion eines spezifischen Messpunkts alle bis auf den selektierten Messpunkt verworfen werden.

Dabei kann optional auch ein Bereich des Bilds der Kamera des Geräts ausgewählt werden, in welchem die Ablenkung entlang des Messpfads erfolgen soll, beispielsweise in einem wählbaren Teilbereich 70 oder in einem Vollbildbereich 71, bei welchem Ablenkbereich und dargestellter Bereich des Bilds der Kamera aufeinander abgestimmt sind. Ein derartiger Messpfad kann dabei optional auch am Display angezeigt und/oder durch Ablenken eines sichtbaren Pilot- oder Distanzmessstrahls am Objekt markiert sein.

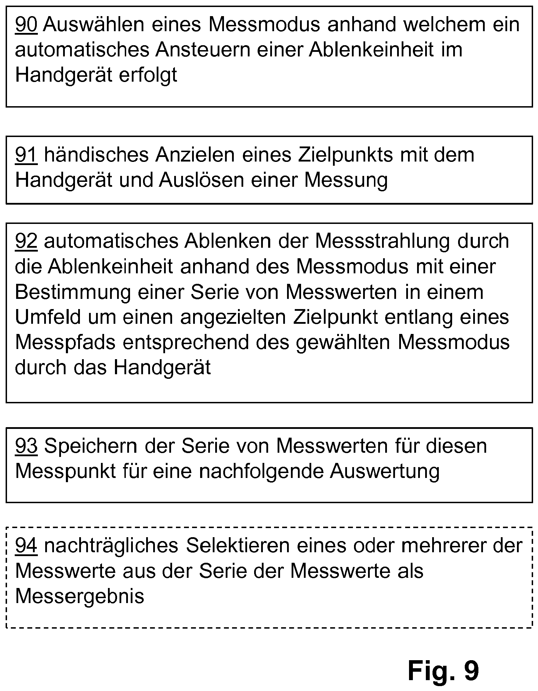

**Fig. 9** zeigt ein Blockdiagramm einer Ausführungsform eines Verfahrens oder einer Methode zum Aufmessen entsprechend der vorliegenden Erfindung mit einem erfindungsgemäßen Handgerät.

In Block 90 erfolgt ein Auswählen eines Messmodus, anhand welchem ein automatisches Ansteuern einer Ablenkeinheit im Handgerät erfolgt.

In Block 91 erfolgt ein händisches Anzielen eines Zielpunkts mit dem Handgerät und Auslösen einer Messung.

In Block 92 erfolgt ein automatisches Ablenken der Messstrahlung durch die Ablenkeinheit anhand des Messmodus mit einer Bestimmung einer Serie von Messwerten in einem Umfeld um einen angezielten Zielpunkt entlang eines Messpfads entsprechend des gewählten Messmodus durch das Handgerät.

In Block 93 erfolgt dann ein Speichern der Serie von Messwerten für diesen Messpunkt für eine nachfolgende Auswertung.

In Block 94 erfolgt optional ein nachträgliches Selektieren eines oder mehrerer der Messwerte aus der Serie der Messwerte als Messergebnis erfolgen.

## Patentansprüche

1. Laser-Entfernungsmessgerät (1) in Form eines Handgeräts mit,
▪ einem zur händischen Benutzung ausgebildetes Gehäuse,
▪ einer im Gehäuse angeordneten elektro-optischen Entfernungsmesseinrichtung, zur Ermittlung zumindest einer Messdistanz zwischen dem Laser-Entfernungsmessgerät (1) und einem Zielobjekt in einer Messrichtung, mit
∘ einem Lichtemitter, insbesondere einer Halbleiter-Lichtquelle oder einem Laser, zur Aussendung eines optischen Messlichtstrahls,
∘ einem Photoempfänger zur Detektion von Anteilen des optischen Messlichtstrahls welche vom Zielobjekt reflektiert oder zurückgestreut werden,
∘ einer Optikeinheit, insbesondere mit einer Sendeoptik mit einer Emissions-Kollimationslinse zur Kollimierung des ausgesendeten optischen Messlichtstrahls entlang einer Messachse in einer Messrichtung zum Zielobjekt und einer Empfangsoptik mit einer Sammellinse zum Empfang der reflektierten oder zurückgestreuten Anteile aus einer Empfangsrichtung auf einem photoempfindlichen Bereich des Photoempfängers,
∘ eine Auswerte- und Steuereinheit zur Ermittlung von zumindest einer Messdistanz basierend auf den reflektierten oder zurückgestreuten Anteilen des optischen Messlichtstrahls nach einem Signallaufzeit- und/oder Phasenmessprinzip anhand von einem oder mehreren Pulsen des optischen Messlichtstrahls,
▪ einer Kamera im Gehäuse, ausgebildet zur Aufnahme eines Bilds des Zielobjekts mit einem Blickfeld in Messrichtung,
▪ einer Ablenkeinheit im Gehäuse zur Ablenkung der Messrichtung relativ zum Gehäuse innerhalb zumindest eines Teilbereichs des Blickfelds der Kamera,
▪ eine am Gehäuse angeordnete Bedien- und Eingabeanordnung ausgebildet zur Bedienung wenigstens der Entfernungsmesseinrichtung und der Kamera, mit einer am Gehäuse angeordneten mit der Bedien- und Eingabeanordnung gekoppelte Sichtanzeige auf der das Bild der Kamera als elektronischer Sucher und ein Bedienzustand darstellbar ist,
▪ einer im Gehäuse angeordnete Steuereinheit, welche derart zur Ansteuerung der Entfernungsmesseinrichtung und der Ablenkeinrichtung ausgebildet ist, dass entlang eines Messpfads der Ablenkung eine Serie von Messwerten der Messdistanz in unterschiedlichen Ablenkungen aufgenommen wird, und
▪ die Bedien- und Eingabeanordnung ausgebildet ist um eine nachträgliche Selektion von einer oder mehreren der Messdistanzen aus der Serie von Messwerten durchzuführen.

2. Laser-Distanzmessgerät (1) nach Anspruch 1, **dadurch gekennzeichnet, dass** die Ablenkeinheit mit einem Ablenkbereich der Ablenkung ausgebildet ist, welcher auf einen Winkelbereich von weniger als +/- 10°, vorzugsweise von weniger als +/- 5°, limitiert ist, insbesondere wobei der Ablenkbereich im wesentlichen dem Blickfeld der Kamera des elektronischen Suchers des Geräts entspricht, vorzugsweise wobei die Sichtanzeige zumindest einen Teil des Bilds der Kamera überlagert mit einer Anzeige mehreren Messpunkten der Serie von Messwerten darstellt.

3. Laser-Distanzmessgerät (1) nach zumindest einem der Ansprüche 1 oder 2, **dadurch gekennzeichnet, dass** die Ablenkeinheit für die Ablenkung in nur einer einzigen Richtung, vorzugsweise entlang einer Geraden, ausgebildet ist und die Bedien- und Eingabeanordnung derart ausgebildet ist, dass die Serie von Messwerten als ein lokaler Profilschnitt entlang eines Ablenkbereichs um den Messpunkt bereitgestellt wird.

4. Laser-Distanzmessgerät (1) nach zumindest einem der Ansprüche 1 bis 2, **dadurch gekennzeichnet, dass** die Ablenkeinheit für die Ablenkung in zweidimensionaler Richtung ausgebildet ist und die Bedien- und Eingabeanordnung derart ausgebildet ist, dass die Serie von Messwerten als eine lokale Punktwolke eines Ablenkbereichs um den Messpunkt bereitgestellt wird.

5. Laser-Distanzmessgerät (1) nach zumindest einem der Ansprüche 3 oder 4, **dadurch gekennzeichnet, dass** eine am Gehäuse angeordnete Inertial Measurement Unit (IMU) oder ein Neigungs- oder Beschleunigungssensor derart ausgebildet ist und mit der Ablenkeinheit in Verbindung steht, dass
die Ablenkeinheit derart angesteuert wird, dass die Ablenkung in einer definierten, vorzugsweise horizontalen oder vertikalen, Richtung im Ablenkbereich erfolgt und/oder
mehrere der Serien von Messwerten eine globale Punktwolke bilden, welche grösser als ein Ablenkbereich der Ablenkeinheit ist und bei welcher Punktwolke jeweils entsprechend einer zu den jeweiligen Messwerten der Serie von Messwerten zugehörigen, von der IMU bestimmten Ausrichtung des Geräts und einer zugehörigen Richtung der Ablenkung der Ablenkeinheit zusammengeführt ist.

6. Verfahren zum Aufmessen von Baukörpern oder Räumen mit einem handgehaltenen Laser-Entfernungsmessgerät, nach einem der Ansprüche 1 bis 5, mit
▪ einem Auswählen eines Messmodus, anhand welchem ein automatisches Ansteuern der Ablenkeinheit erfolgt,
▪ einem händischen Anzielen eines Messpunktes mit einer Zielachse der Messstrahlung des handgehaltenen Laser-Entfernungsmessgeräts,
▪ einem Auslösen einer Messung,
▪ einem automatischen Ablenken der Messstrahlung durch die Ablenkeinheit anhand des Messmodus zur Bestimmung einer Serie von Messwerten in einem Umfeld um den Messpunkt entlang eines Messpfads entsprechend des gewählten Messmodus, wobei der Messpunkt an sich ein Punkt der Serie von Messwerten ist, und
▪ einem Speichern der Serie von Messwerten für diesen Messpunkt für eine nachfolgende Auswertung des Messpunkts mit einem nachträglichen Selektieren eines oder mehrerer der Messwerte aus der Serie der Messwerte als Messergebnis.

7. Verfahren nach Anspruch 6, **dadurch gekennzeichnet, dass** ein Auswählen des Messmodus aus einem von zumindest einem
▪ Horizontal-Profilmessmodus,
▪ Vertikal-Profilmessmodus,
▪ Freirichtungs-Profilmessmodus,
▪ Kreuz-Profilmessmodus,
▪ Kreis-Erfassungsmodus,
▪ Blickfeld-Flächenerfassungsmodus, oder
▪ Auswahlbereich-Flächenerfassungsmodus erfolgt.

8. Verfahren nach zumindest einem der Ansprüche 6 bis 7, **dadurch gekennzeichnet, dass** der Messpfad als eine Gerade ausgebildet ist und die Serie von Messwerten einen Profilschnitt um den Messpunkt ausbildet, insbesondere wobei eine horizontbezogene Orientierung der Gerade am Gerät anzeigbar ist oder von der Ablenkeinheit entsprechend einer Vorgabe automatisch eingehalten wird.

9. Verfahren nach zumindest einem der Ansprüche 6 bis 8, **dadurch gekennzeichnet, dass** der Messpfad einen Kreisring, ein Ellipsoid, ein Kreuz oder eine Linie, ausbildet, vorzugsweise wobei der Messpfad als zumindest Teil eines geschlossenen Pfads von der Ablenkeinheit abgefahren wird.

10. Verfahren nach Anspruch 8 oder 9, **dadurch gekennzeichnet, dass,** in den Profilschnitt ein Polygonzug mit zumindest einer Geraden von einer Recheneinheit automatisch eingepasst wird, welcher Polygonzug als Messergebnis zur Auswertung auf einer Sichtanzeige bereitgestellt wird.

11. Verfahren nach zumindest einem der Ansprüche 6 bis 9, **dadurch gekennzeichnet, dass** der Messpfad als ein zweidimensionaler Scann-Pfad eines Flächenbereichs ausgebildet ist, insbesondere als ein sukzessives zeilenweises Raster-Scannen oder ein Zick-Zack-Scannen, ausgebildet ist, und das Messergebnis des Messpfads als eine lokale Puntkwolke um den Messpunkt bereitgestellt wird, vorzugsweise wobei geometrische primitive wie Geraden, Polygonzüge, Kreisbögen, ebene Flächen, Quader, Zylinder von einer Recheneinheit automatisch oder semi-automatisch in der lokalen Punktwolke erkannt und/oder in die lokale Punktwolke eingepasst werden.

12. Verfahren nach zumindest einem der Ansprüche 6 bis 11, **dadurch gekennzeichnet, dass** während dem händischen Anzielen eine Grobmessung mit einer langsameren Ablenkung und/oder geringeren Distanzauflösung, und beim Auslösen eine Feinmessung mit einer gegenüber der Grobmessung schnelleren Ablenkung und/oder höheren Distanzauflösung erfolgt, und wobei während des händischen Anzielens ein Anzeigen der Grobmessung und/oder eines in die Grobmessung gefitteten Polygonzugs mit einer Markierung eines aktuell angezielten Messpunkts an einem Display erfolgt, mit welchem ein spezifischer Messpunkt beim händischen Anzielen über grössere Entfernungen selektierbar ist.

13. Verfahren nach zumindest einem der Ansprüche 6 bis 12, **dadurch gekennzeichnet, dass** das händische Anzielen über eine Sichtanzeige des Entfernungsmessgeräts (1) als einem elektronischen Sucher erfolgt, welche Sichtanzeige auch den Messmodus und die Serie von Messwerten graphisch, insbesondere an der Sichtanzeige editierbar, bereitstellt.

14. Verfahren nach zumindest einem der Ansprüche 6 bis 13, **dadurch gekennzeichnet, dass** nach Beenden des Anzielens ein nachträgliches Selektieren eines oder mehrerer der Messwerte aus der Serie der Messwerte oder eines zwischen diesen interpolierten Werts als Messergebnis des Aufmessens erfolgt.

15. Computerprogrammprodukt mit Programmcode, der auf einem maschinenlesbaren Träger gespeichert ist, als Festverdrahtete Logik ausgeführt ist oder als Computer-Daten-Signal, verkörpert durch eine elektromagnetische Welle, Durchführung des Verfahrens nach einem der Ansprüche 6 bis 14, wobei der Programmcode zur Durchführung eines ein Ansteuerns einer Laser-Entfernungsmesseinrichtung und einer Ablenkeinheit in einem als Handgerät ausgebildeten Laser-Entfernungsmessgerät ausgebildet ist, welches Ansteuern derart erfolgt, dass eine Serie von Messwerten in unterschiedlichen Ausrichtungen aufgenommen wird und im nachhinein eine Selektion eines spezifischen Messwerts in dieser Serie von Messwerten als Messergebnis erfolgt, wenn der Programmcode in einem als Handgerät ausgebildeten Laser-Entfernungsmessgerät nach einem der Ansprüche 1 bis 5 ausgeführt wird.

## Claims

1. Laser distance meter (1) in the form of a handheld device comprising,
▪ a housing configured for manual use,
▪ an electro-optical distance measurement unit arranged in the housing, for ascertaining at least one measured distance between the laser distance meter (1) and a target object in a measurement direction, comprising
∘ a light emitter, in particular a semiconductor light source or a laser, for emitting an optical measurement light beam,
∘ a photoreceiver for detecting components of the optical measurement light beam which are reflected or backscattered from the target object,
∘ an optical unit, in particular comprising an emission optical unit having an emission collimation lens for collimating the emitted optical measurement light beam along a measurement axis in a measurement direction to the target object and a receiving optical unit having a converging lens for receiving the reflected or backscattered components from a receiving direction on a photosensitive region of the photoreceiver,
∘ an analysis and control unit for ascertaining at least one measured distance based on the reflected or backscattered components of the optical measurement light beam according to a time of flight and/or phase measurement principle on basis of one or more pulses of the optical measurement light beam,
▪ a camera in the housing, configured to record an image of the target object having a field of view in the measurement direction,
▪ a deflection unit in the housing for deflecting the measurement direction in relation to the housing within at least a subregion of the field of view of the camera,
▪ an operating and input arrangement, which is arranged at the housing and configured to operate at least the distance measurement unit and the camera, having a visual display, which is arranged at the housing and is coupled to the operating and input arrangement and on which the image of the camera is displayable as an electronic viewfinder and on which an operating status is displayable,
▪ a control unit arranged in the housing, which is configured for activating the distance measurement unit and the deflection unit in such a way that a series of measured values of the measured distance is recorded at different deflections along a measurement path of the deflection, and
▪ the operating and input arrangement is configured to carry out a subsequent selection of one or more of the measured distances from the series of measured values.

2. Laser distance meter (1) according to Claim 1,
**characterized in that** the deflection unit is configured having a deflection range of the deflection which is limited to an angle range of less than +/- 10°, preferably less than +/- 5°, in particular wherein the deflection range essentially corresponds to the field of view of the camera of the electronic viewfinder of the device, preferably wherein the visual display displays at least a part of the image of the camera overlaid with a display of multiple measurement points of the series of measured values.

3. Laser distance meter (1) according to at least either of Claims 1 and 2, **characterized in that** the deflection unit is configured for the deflection in only one single direction, preferably along a straight line, and the operating and input arrangement is configured in such a way that the series of measured values is provided as a local profile section along a deflection range around the measurement point.

4. Laser distance meter (1) according to at least one of Claims 1 and 2, **characterized in that** the deflection unit is configured for the deflection in two-dimensional directions and the operating and input arrangement is configured in such a way that the series of measured values is provided as a local point cloud of a deflection range around the measurement point.

5. Laser distance meter (1) according to at least one of Claims 3 and 4, **characterized in that** an inertial measurement unit (IMU) or an inclination or acceleration sensor arranged at the housing is configured and linked to the deflection unit in such a way that
the deflection unit is activated in such a way that the deflection takes place in a defined, preferably horizontal or vertical direction in the deflection range, and/or
a plurality of the series of measured values form a global point cloud, which is larger than a deflection range of the deflection unit and in which point cloud in each case corresponding to an alignment of the device, which is associated with the respective measured values of the series of measured values and is defined by the IMU, and an associated direction of the deflection of the deflection unit is combined.

6. Method for measuring buildings or rooms using a handheld laser distance meter according to any one of Claims 1 to 5, comprising
▪ selecting a measurement mode, on the basis of which an automatic activation of the deflection unit is performed,
▪ manually targeting a measurement point using a target axis of the measurement radiation of the handheld laser distance meter,
▪ triggering a measurement,
▪ automatically deflecting the measurement radiation by way of the deflection unit on the basis of the measurement mode to define a series of measured values in surroundings around the measurement point along a measurement path in accordance with the selected measurement mode, wherein the measurement point as such is one point of the series of measured values, and
▪ storing the series of measured values for this measurement point for a subsequent analysis of the measurement point with a subsequent selection of one or more of the measured values from the series of the measured values as measurement result.

7. Method according to Claim 6, **characterized in that** a selection of the measurement mode from one of at least one of the following
▪ horizontal profile measurement mode,
▪ vertical profile measurement mode,
▪ free direction profile measurement mode,
▪ cross profile measurement mode,
▪ circle acquisition mode,
▪ field of view surface acquisition mode, or
▪ selected region surface acquisition mode is performed.

8. Method according to at least one of Claims 6 and 7, **characterized in that** the measurement path is formed as a straight line and the series of measured values forms a profile section around the measurement point, in particular wherein a horizon-referenced orientation of the straight line is displayable at the device or is maintained automatically by the deflection unit in accordance with a specification.

9. Method according to at least one of Claims 6 to 8, **characterized in that** the measurement path forms a circular ring, an ellipsoid, a cross or a line, preferably wherein the measurement path is traveled by the deflection unit as at least part of a closed path.

10. Method according to Claim 8 or 9, **characterized in that** a polygon train having at least one straight line is automatically fitted by a processing unit into the profile section, which polygon train is provided as the measurement result for analysis on a visual display.

11. Method according to at least one of Claims 6 to 9, **characterized in that** the measurement path is formed as a two-dimensional scanning path of a surface region, in particular is formed as successive line-by-line grid scanning or zigzag scanning, and the measurement result of the measurement path is provided as a local point cloud around the measurement point, preferably wherein geometric primitives such as straight lines, polygon trains, circular arcs, planar surfaces, cuboids, and/or cylinders are recognized automatically or semiautomatically by a processing unit in the local point cloud and/or fitted into the local point cloud.

12. Method according to at least one of Claims 6 to 11, **characterized in that** during the manual targeting, a rough measurement is performed using a slower deflection and/or lower distance resolution, and upon triggering a fine measurement is performed using a faster deflection and/or higher distance resolution than the rough measurement, and wherein during the manual targeting, a display of the rough measurement and/or of a polygon train fitted in the rough measurement having a marking of a presently targeted measurement point is performed on a display screen, with which a specific measurement point is selectable during the manual targeting over greater distances.

13. Method according to at least one of Claims 6 to 12, **characterized in that** the manual targeting is performed via a visual display of the distance meter (1) as an electronic viewfinder, which visual display also provides the measurement mode and the series of measured values graphically, in particular in a manner editable on the visual display.

14. Method according to at least one of Claims 6 to 13, **characterized in that** after ending the targeting, a subsequent selection of one or more of the measured values from the series of measured values or a value interpolated between them as the measurement result of the measuring is performed.

15. Computer program product having program code, which is stored on a machine-readable carrier, is embodied as a hardwired logic, or as a computer data signal, embodied by an electromagnetic wave for carrying out the method according to any one of Claims 6 to 14, wherein the program code is configured for carrying out an activation of a laser distance measurement unit and a deflection unit of a laser distance meter configured as a handheld device, which activation is performed in such a way that a series of measured values is recorded in different alignments and thereafter a selection of a specific measured value in this series of measured values as measurement result is performed, if the program code is executed in a laser distance meter configured as a handheld device according to any one of Claims 1 to 5.

## Revendications

1. Télémètre laser (1) sous forme d'appareil portatif doté
▪ d'un boîtier réalisé pour l'utilisation manuelle,
▪ d'un dispositif télémétrique électro-optique disposé dans le boîtier, destiné à déterminer au moins une distance mesurée entre le télémètre laser (1) et un objet cible dans une direction de mesure, avec
∘ un émetteur de lumière, en particulier une source lumineuse à semi-conducteurs ou un laser, destinée à l'émission d'un faisceau lumineux de mesure optique,
∘ un photorécepteur destiné à la détection de fractions du faisceau lumineux de mesure optique qui sont renvoyées ou réfléchies par l'objet cible,
∘ une unité optique, en particulier dotée d'une optique d'émission dotée d'une lentille collimatrice d'émission destinée à collimater le faisceau lumineux de mesure optique émis le long d'un axe de mesure dans une direction de mesure vers l'objet cible et d'une optique de réception dotée d'une lentille convergente destinée à recevoir les fractions renvoyées ou réfléchies depuis une direction de réception sur une zone photosensible du photorécepteur,
∘ une unité de contrôle et de commande destinée à déterminer au moins une distance mesurée en se basant sur les fractions renvoyées ou réfléchies du faisceau lumineux de mesure optique d'après un principe de mesure des phases et/ou des temps de propagation du signal à l'aide d'une ou plusieurs impulsions du faisceau lumineux de mesure optique,
▪ d'une caméra dans le boîtier, réalisée pour la capture d'une image de l'objet cible avec un champ de vision dans la direction de mesure,
▪ d'une unité de déviation dans le boîtier destinée à dévier la direction de mesure relativement au boîtier à l'intérieur d'au moins une zone partielle du champ de vision de la caméra,
▪ d'un agencement opérationnel et de saisie disposé sur le boîtier réalisé pour l'opération d'au moins le dispositif télémétrique et de la caméra, avec un affichage visuel disposé sur le boîtier et couplé à l'agencement opérationnel et de saisie sur lequel peuvent être représentés l'image de la caméra en tant que viseur électronique et un état opérationnel,
▪ d'une unité de commande disposée dans le boîtier, laquelle est réalisée pour commander le dispositif télémétrique et le dispositif de déviation de telle sorte qu'une série de valeurs de mesure de la distance mesurée est capturée à différentes déviations le long d'un chemin de mesure de la déviation, et
▪ l'agencement opérationnel et de saisie est réalisé pour effectuer une sélection postérieure d'une ou plusieurs des distances mesurées parmi la série de valeurs de mesure.

2. Appareil de mesure de distance laser (1) selon la revendication 1, **caractérisé en ce que** l'unité de déviation est réalisée avec une zone de déviation limitée à un secteur angulaire inférieur à +/- 10°, de préférence inférieur à +/- 5°, en particulier dans lequel la zone de déviation correspond sensiblement au champ de vision de la caméra du viseur électronique de l'appareil, de préférence dans lequel l'affichage visuel représente au moins une partie de l'image de la caméra en superposition avec un affichage de plusieurs points de mesure de la série de valeurs de mesure.

3. Appareil de mesure de distance laser (1) selon au moins une des revendications 1 ou 2, **caractérisé en ce que** l'unité de déviation est réalisée pour la déviation dans une unique direction seulement, de préférence le long d'une droite, et l'agencement opérationnel et de saisie est réalisé de telle sorte que la série de valeurs de mesure est fournie comme une coupe de profil locale le long d'une zone de déviation autour du point de mesure.

4. Appareil de mesure de distance laser (1) selon au moins une des revendications 1 à 2, **caractérisé en ce que** l'unité de déviation est réalisée pour la déviation dans une direction bidimensionnelle et l'agencement opérationnel et de saisie est réalisé de telle sorte que la série de valeurs de mesure est fournie comme un nuage de points local d'une zone de déviation autour du point de mesure.

5. Appareil de mesure de distance laser (1) selon au moins une des revendications 3 ou 4, **caractérisé en ce qu'**une centrale inertielle (IMU) disposée sur le boîtier ou un accéléromètre ou inclinomètre est réalisé et en liaison avec l'unité de déviation de telle sorte que l'unité de déviation est commandée de sorte que la déviation s'effectue dans une direction définie, de préférence horizontale ou verticale, dans la zone de déviation et/ou plusieurs des séries de valeurs de mesure forment un nuage de points global, lequel est plus grand qu'une zone de déviation de l'unité de déviation et pour chaque nuage de points est respectivement assemblée une direction correspondante de l'appareil déterminée par la centrale inertielle et associée aux valeurs de mesure respectives de la série de valeurs de mesure et une direction associée de la déviation de l'unité de déviation.

6. Procédé de prise de mesures de bâtiments ou de pièces avec un télémètre laser portatif selon l'une des revendications 1 à 5, avec
▪ une sélection d'un mode de mesure, à l'aide duquel une commande automatique de l'unité de déviation s'effectue,
▪ un ciblage manuel d'un point de mesure avec un axe cible du faisceau de mesure du télémètre laser portatif,
▪ un déclenchement d'une mesure,
▪ une déviation automatique du faisceau de mesure par l'unité de déviation à l'aide du mode de mesure afin de déterminer une série de valeurs de mesure dans un environnement autour du point de mesure le long d'un chemin de mesure correspondant au mode de mesure sélectionné, dans lequel le point de mesure est en soi un point de la série de valeurs de mesure, et
▪ un enregistrement de la série de valeurs de mesure pour ce point de mesure pour une évaluation subséquente du point de mesure avec une sélection postérieure d'une ou plusieurs des valeurs de mesure de la série de valeurs de mesure en tant que résultat de la mesure.

7. Procédé selon la revendication 6, **caractérisé en ce qu'**une sélection du mode de mesure s'effectue parmi un d'au moins un
▪ mode de mesure de profil horizontal,
▪ mode de mesure de profil vertical,
▪ mode de mesure de profil à direction libre,
▪ mode de mesure de profil cruciforme,
▪ mode de saisie circulaire,
▪ mode de saisie de surface du champ de vision, ou
▪ mode de saisie de surface de la zone sélectionnée.

8. Procédé selon au moins une des revendications 6 à 7, **caractérisé en ce que** le chemin de mesure est réalisé comme une droite et la série de valeurs de mesure réalise une coupe de profil autour du point de mesure, en particulier dans lequel une orientation de la droite liée à la ligne d'horizon peut être affichée sur l'appareil ou est automatiquement respectée par l'unité de déviation conformément à une valeur prédéfinie.

9. Procédé selon au moins une des revendications 6 à 8, **caractérisé en ce que** le chemin de mesure réalise un anneau circulaire, une ellipsoïde, une croix ou une ligne, de préférence dans lequel le chemin de mesure est tracé à partir de l'unité de déviation comme au moins une partie d'un chemin fermé.

10. Procédé selon la revendication 8 ou 9, **caractérisé en ce qu'**une ligne polygonale dotée d'au moins une droite est automatiquement adaptée dans la coupe de profil par une unité de calcul, laquelle ligne polygonale est fournie comme résultat de mesure pour évaluation sur un affichage visuel.

11. Procédé selon au moins une des revendications 6 à 9, **caractérisé en ce que** le chemin de mesure est réalisé comme un chemin de balayage bidimensionnel d'une zone de surface, en particulier est réalisé comme un balayage de trame ligne par ligne progressif ou un balayage en zigzag, et le résultat de mesure du chemin de mesure est fourni comme un nuage de points autour du point de mesure, de préférence dans lequel des primitives géométriques comme des droites, des lignes polygonales, des arcs de cercle, des surfaces plates, des parallélépipèdes, des cylindres sont reconnues dans le nuage de points local et/ou adaptées dans le nuage de points local par une unité de calcul de manière automatique ou semi-automatique.

12. Procédé selon au moins une des revendications 6 à 11, **caractérisé en ce que** pendant le ciblage manuel une mesure grossière s'effectue avec une déviation plus lente et/ou une résolution de distance inférieure, et lors du déclenchement une mesure fine s'effectue avec une déviation plus rapide et/ou une résolution de distance supérieure par rapport à la mesure grossière, et **en ce que** pendant le ciblage manuel un affichage de la mesure grossière et/ou d'une ligne polygonale adaptée dans la mesure grossière s'effectue avec un marquage d'un point de mesure actuellement ciblé sur un écran, avec lequel un point de mesure spécifique est sélectionnable lors du ciblage manuel sur de grandes distances.

13. Procédé selon au moins une des revendications 6 à 12, **caractérisé en ce que** le ciblage manuel s'effectue par le biais d'un affichage visuel du télémètre (1) en tant qu'un viseur électronique, lequel affichage visuel fournit également le mode de mesure et la série de valeurs de mesure de manière graphique, en particulier éditable sur l'affichage visuel.

14. Procédé selon au moins une des revendications 6 à 13, **caractérisé en ce qu'**après la fin du ciblage, s'effectue une sélection postérieure d'une ou plusieurs des valeurs de mesure parmi la série de valeurs de mesure ou d'une valeur interpolée entre celles-ci comme résultat de mesure de la prise de mesure.

15. Produit-programme informatique doté d'un code de programmation, lequel est enregistré sur un support lisible par machine, est exécuté comme logique câblée ou comme signal de données informatiques incarné par une onde électromagnétique, destiné à la mise en œuvre du procédé selon l'une des revendications 6 à 14, dans lequel le code de programmation est réalisé pour la mise en œuvre d'une commande d'un dispositif télémétrique laser et d'une unité de déviation dans un télémètre laser réalisé comme appareil portatif, laquelle commande s'effectue de telle sorte qu'une série de valeurs de mesure est capturée dans différentes directions et une sélection d'une valeur de mesure spécifique en tant que résultat de mesure s'effectue postérieurement dans cette série de valeurs de mesure, lorsque le code de programmation est exécuté dans un télémètre laser selon l'une des revendications 1 à 5 réalisé comme appareil portatif.
